Europäisches Patentamt

(19) European Patent Office

Office européen des brevets

(11) Publication number: **0 002 342**
**B1**

(12) **EUROPEAN PATENT SPECIFICATION**

(45) Date of publication of patent specification: **02.09.81**

(51) Int. Cl.³: **C 02 F 1/42**

(21) Application number: **78300672.9**

(22) Date of filing: **28.11.78**

(54) Water purification process.

(30) Priority: **30.11.77 GB 4977077**
**07.10.78 GB 3971478**

(43) Date of publication of application:
**13.06.79 Bulletin 79/12**

(45) Publication of the grant of the European patent:
**02.09.81 Bulletin 81/35**

(84) Designated Contracting States:
**BE DE FR GB NL SE**

(56) References cited:
**FR - A - 2 207 866**
**GB - A - 849 979**
**US - A - 2 999 821**
**US - A - 3 849 306**

**KEMA PUBLICATIES, Serie XII, no. 16, 1972, Arnhem**
**H.W. VENDERBOSCH et al. "Zur Kapazität Ionenaustauschern bei der Entfernung von Spurenverunreinigungen aus Wasser", pages 251—268.**

(73) Proprietor: **PERMUTIT-BOBY LIMITED**
**Laverstoke Mill**
**Whitchurch Hampshire (GB)**

(72) Inventor: **Smith, Joseph Henry**
**18 Wavendon Avenue**
**London W4 (GB)**
Inventor: **Peploe, Trevor Anthony**
**16 Gunnersbury Crescent**
**London W3 (GB)**

(74) Representative: **Lawrence, Peter Robin Broughton et al,**
**Gill, Jennings & Every 53-64 Chancery Lane**
**London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Water purification process

This invention relates to the purification by ion exchange of water that is already of low solids content. For instance it will normally have a total dissolved solids content of below 10 mg/l (10 parts per million).

Typical water of this very low solids content is condensate and methods of purifying such water are known and are often termed condensate polishing processes. Traditional condensate polishing processes have aimed at the production of final dissolved solids contents of 5 to 50 $\mu$g/l (parts per billion) and in practice it has been substantially impossible to obtain values below 5 $\mu$g/l.

Ion exchange processes were initially developed for the purification of water containing relatively high dissolved solids contents, e.g. above 20 mg/l, and it is known that these conventional dimineralisation ion exchange processes, which have been used for very many years, may be conducted using various combinations of anion and cation exchange resins. Mixed bed systems, in which the bed is a mixture of anion exchange resin and cation exchange resin, were long ago accepted as being very advantageous for some purposes. When condensate polishing processes began to be developed many years ago mixed bed systems were selected for them and they have been used almost without exception for all condensate polishing processes ever since. Thus there were some proposals to pass the water first through a bed of cation exchange resin and then through a mixed bed but commercially most condensate polishing processes have merely involved the use of a mixed bed. Traditionally the bed is at least 1 metre deep and if very low impurity levels are required the bed is generally deeper.

There are only two serious proposals of which we are aware for conducting a condensate polishing system without a mixed bed. One is a proposal at pages 825 to 830 of Volume 37 of the Proceedings of the American Power Conference 1975 (by Shivers, Schmidt and Newberry) to conduct a condensate polishing process using a cation unit followed by an anion unit. However the authors do remark that the mixed bed units gave better effluent and that the two bed system did have some other shortcomings. For instance they state the process incurred increased pressure drop due to the deeper beds that were used in the two bed system as opposed to the mixed bed system. The other is in US Patent Specification No. 3,849,306 in which a condensate polishing process is conducted by passage of the water through three separate vessels, the first containing cation exchange resin, the second anion exchange resin and the third cation exchange resin. The flow rates through the beds appear conventional as also do the dissolved solids contents that are obtained.

Users of extremely pure water continually request even lower impurity levels. For instance in modern power stations such as thos involving pressurised water reactors or advanced gas cooled reactors the users may now ask for total dissolved solids contents of less than 5 $\mu$g/l, for instance a total dissolved sodium ion of less than 1 $\mu$g/l and similar figures for sulphate and chloride ions.

The situation is further complicated by the desire, of power stations in particular to use water having high pH as a result of having been dosed with ammonia or other nitrogenous base since this constitutes a heavy load on an orthodox hydrogen-hydroxide form mixed bed. This causes considerable interest in the operation of mixed beds in the $NH_4OH$ form with their concomitant additional difficulties in meeting the very low sodium, sulphate, and chloride figures each of less than 1 $\mu$g/l.

Particularly serious problems are also liable to arise when sea water is used for the indirect cooling of condensate since even minute leakage of sea water into the condensate will give a large increase in the dissolved solids content of the condensate.

Although it has long been recognised that the mixed bed is the best system for condensate polishing it has also long been recognised that the use of the mixed bed creates problems which have to be solved, and a lot of effort has been put into solving these problems.

The principle disadvantage of mixed bed operation for removal down to the very low levels now required is the very fact that it requires intimate mixing of the two ion exchange materials, followed by very complete unmixing for regeneration purposes. If separation prior to regeneration is not absolutely complete, there will be some cation resin entrained in the main body of the anion resin and vice versa. During regeneration any cation resin in the anion resin component will be contacted with caustic soda and converted to the sodium form, and similarly any anion resin in the main body of the cation resin will be contacted with an acid, typically sulphuric or hydrochloric, and will thus be converted to that ionic form.

Since the final quality of treated water depends on the equilibrium between the resin phase and the aqueous phase, this cross contamination can make it difficult, if not impossible, to reach the very low levels currently required, particularly when operating the ammonium hydroxide form.

This intrinsic disadvantage of mixed bed operation has been much researched and varous schemes have been used to ameliorate the problem. There have been two main directions of research, the first being to improve the separation techniques by the incorporation of a third inert material into the mix, or by chemical separation of the two resins by use of an aqueous solution of relatively high specific gravity, typically caustic soda.

Alternatively, a certain degree of "cross contamination" is accepted as inevitable, and steps taken to remove the offending ions by chemical means, typically involving recycling of ammonia or lime solutions through the resins at certain stages of the regeneration procedure.

Despite all this effort into solving the problems that are incurred in a mixed bed process no more radical way of overcoming the problems has heretofore been suggested and indeed Shivers et al in the aforementioned article state that the mixed bed system gave better effluent than the two bed system they described.

We have now realised that if a fundamentally different approach to the attainment of very low impurity levels is adopted and if one rejects much of the conventional thinking on ion exchange, such as the desirability of mixed beds and increasing bed thickness for low impurity levels, it is possible to devise a process capable of giving much lower impurity levels than those that were conveniently available previously. For instance whereas previously it was difficult to achieve total dissolved solids levels below 5 $\mu$g/l it is possible so to operate in accordance with the invention as to achieve dissolved solids contents of below 1 $\mu$g/l.

In its broadest aspect the invention comprises a process of purifying water of low solids content by ion exchange comprising treating the water in a bed of anion exchange resin followed by a final bed of cation exchange resin in which each bed is less than 1 metre deep and the cation and anion exchange resins are regenerated, when necessary, separate from one another and is characterised in that the flow rate through the final bed is above 100 metres per hour and the flow rate and the regeneration are such that the dissolved solids content of the purified water is below 5 $\mu$g/l. Preferably the flow rate through each bed is above 100 metres per hour. Since each bed is less than 1 metre deep this means that the flow rate through each bed is above 100 bed volumes per hour.

Whereas in the prior art additional purity was generally considered to require additional depth of bed an important feature of the invention is that the high degree of purity is best obtained with relatively shallow beds. Thus each bed is less than 1 metre deep and most preferably less than about 75 cm. Naturally there must be sufficient bed thickness to achieve the desired purification and the depth will generally be at least 20 cm.

The cation bed is generally the final bed in the process, the anion bed may be the first bed and it is possible to operate a two bed process as described above to obtain a total dissolved solids content in the effluent of, for instance, 5 $\mu$g/l or less. However problems can arise due to the contact of the condensate or other low solids content water initially with the anion exchange resin bed and, depending upon the nature of the water, these difficulties may prevent the attainment of the optimum very low impurity levels in a two bed process.

An important and highly preferred aspect of the invention is one in which these difficulties are reduced by passing the water first through a separate bed of cation exchange resin before passing it through the bed of anion exchange resin, preferably at a fast rate.

A particularly preferred process according to the invention comprises passing the water of low solids content through a bed of cation exchange resin and then through a separate bed of anion exchange resin and then through a separate bed of cation exchange resin, the flow rate through each bed being above 100 metres per hour. By this process it is easily possible to achieve a quantity of dissolved solids in the treated water of below 5 $\mu$/l and even below 1 $\mu$g/l. For instance a total dissolved solids content of as low as 0.1 $\mu$g/l is obtainable by this process.

The flow rate through the final cation bed, and preferably also through the other bed or beds, may be about 120 metres per hour or above, for instance up to 300 metres per hour. Generally it is from 120 to 240 metres per hour, most preferably 120 to 150 metres per hour. Expressed in terms of bed volumes the flow rate is preferably above 120 bv/hr often 150 to 200 bv/hr or higher for instance up to 500 bv/hr, often about 360 bv/hr. Each bed is usually less than 1 m preferably less than 75 cm deep and when there are three beds the total depth of the two cation beds is preferably about the same as the depth of the anion bed. For instance each cation bed may be half the depth of the anion bed. Conveniently the anion bed is 50 to 75 cm deep and each cation bed is 25 to 40 cm deep.

The cation and anion resins are maintained in separate beds. Thus the cation resin is regenerated independently of the anion resin and normally separate beds of cation resin are regenerated independently of each other. Thus the anion and cation resins are never mixed and so optimum regeneration of each individually can be achieved and the cross contamination that has previously been accepted as inevitable, and which is a major cause of impurities in the final effluent, is totally avoided.

Regeneration can be by conventional reagents, with the cation resin being regenerated with, for instance, hydrochloric acid or sulphuric acid and the anion resin being regenerated with sodium hydroxide, but it is preferred to regenerate the anion resin in two stages, first by treatment with sodium carbonate or bicarbonate and then by treatment with sodium hydroxide, which is generally passed through the bed being regenerated in the same direction as the sodium carbonate or bicarbonate.

Preferably the amount of sodium carbonate is from 10 to 90%, usually 10 to 50%, on a dry weight basis of the total amount of sodium carbonate plus sodium hydroxide and is generally from 10 to 50 grams dry weight per litre of anion exchange resin. The sodium carbonate or bicarbonate solution used for the first stage of the regeneration preferably has a concentration of from 1 to 5%, with about 2% being optimum. The sodium hydroxide solution preferably has a concentration of 4 to 6%.

When the process involves the use of two beds of cation exchange resin it is preferred to regenerate the bed of cation exchange resin through which the service flow of water passes first with regenerant that has already passed through the other bed of cation exchange resin.

Service flow of water through each of the beds of resin is preferably downflow and regeneration also is preferably downflow. Each bed is preferably backwashed before regeneration and air mixed and then rinsed after regeneration. The air mixing helps remove deposits that may have accumulated on the resin particles and helps expose active sites of the resin particles and makes the resin particle distribution more uniform through the bed. Regeneration may be conducted in the same vessel as service flow or in a separate vessel. A typical cycle involves downflow of water being purified, moving the resin by conventional means out of the service vessel and into a regenerant vessel, backwashing the resultant bed, regenerating it in either direction, returning the resin to the service vessel, air mixing it and rinsing it.

It is desirable that the final cation bed, and preferably all the beds, are thoroughly washed before initial use and after each regeneration before service flow starts. This is because, with the very low impurity levels achievable in the invention, residue of, for instance, sodium hydroxide regenerant solution can have a serious effect upon the impurity.

The resins used in the invention may be conventional strong acid and strong base resins. Thus they may comprise a polymeric matrix, for instance of polystyrene or a polyacrylate matrix cross linked with a diethylenically unsaturated cross linking agent such as divinyl benzene, carrying quaternary ammonium or sulphonic groups.

We have surprisingly found that in some instances the process of the invention results in a surprising increase in the content of dissolved chloride and this is undesirable. We have found that it is possible to avoid this by the use of nuclear grade resins or, more generally, by the use of resins that have been scoured with steam before use or in some other way washed thoroughly so as to remove any traces of chloride remaining from their manufacture or resins that were made by a manufacturing process that did not involve the use of an organic chlorinated solvent. Although ion exchange resins often are made using an organic chlorinated solvent processes in which such a solvent is avoided are known and are preferably used for the manufacture of the resins used in the invention.

The water to be purified may be any water of low solids content, e.g. 0.1 to 10 mg/l, usually 1 to 5 or 1 to 10 mg/l and is preferably a condensate for power station use, as discussed above. It may have a substantially neutral pH or, as is common in condensate purification processes, it may have an elevated pH, e.g. above 8 or 8.5, for instance 9 to 10, as a result of the addition of ammonia or other volatile nitrogenous base, such as morpholine or cyclohexylamine, all in conventional manner.

By the process of the invention it is easily possible to obtain very low levels of impurity even when using high pH condensate and even when there is a salt water leakage into the condensate. For instance by the invention it is possible to maintain each of sodium, sulphate and chloride below 0.1 $\mu$g/l, for instance around 0.02 $\mu$g/l so that the total contaminant level in the effluent is below 0.1 $\mu$g/l.

The beds of resin may be in separate ion exchange vessels but preferably they are all in one vessel, one above the other. Thus the process is preferably conducted with the beds being held separate from one another in a vertical tower and with the water to be treated being passed vertically through the tower. Preferably the tower includes substantially horizontal supports, of which one may be the base of the tower, and the water to be treated is passed down through the tower while preventing resin from one bed migrating to the next bed.

Broadly apparatus for use in the invention may comprise a tower including at least two substantially horizontal supports each for supporting a bed of resin, means for passing water successively through the bed on each support and means for preventing resin from passing from one bed to the next. When the tower contains two beds one bed will be constructed to take anion exchange resin and the other cation exchange resin whilst if the tower is designed to have three beds the central bed will be of anion exchange resin and the top and bottom beds of cation exchange resin. The lower most substantially horizontal support may be the base of the tower or near the base.

The apparatus will include means for regenerating the anion and cation exchange resins separately either in the tower or outside, in which event the apparatus will include means for transporting the resins separately from the beds to the regeneration apparatus.

The means for passing water successively through the beds are such as to result in vertical passage of the water through the tower. The passage may be upflow but preferably is downflow. The beds may be arranged so that the water contacts an anion exchange bed first but preferably it contacts a cation exchange bed first.

It is known to conduct ion exchange processes in a tower containing separate layers of resin but such processes have generally involved the deliberate transport of resin from one layer to the next. However in the invention it is necessary to prevent resin passing from one bed to the next and in particular to prevent resin passing from the anion bed to any following cation bed that may be provided. Accordingly the supports used for holding the beds should prevent fines migrating from one bed to the other and the apparatus may include filters for filtering the water that is passing from one bed to the next. These filters may be positioned within the vessel or the water leaving the bottom of one bed may be taken out of the vessel, filtered and introduced to the top of the next lower bed.

Appropriate head space is preferably provided between the top of the top bed and top of the vessel and between the top of each lower bed and the support for each upper bed.

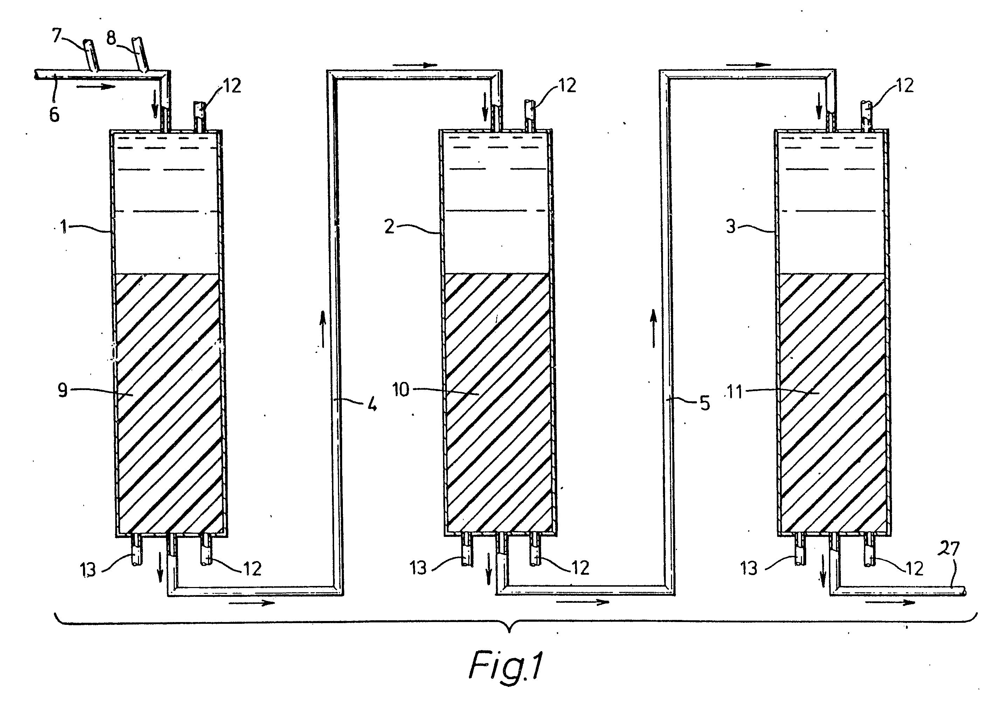

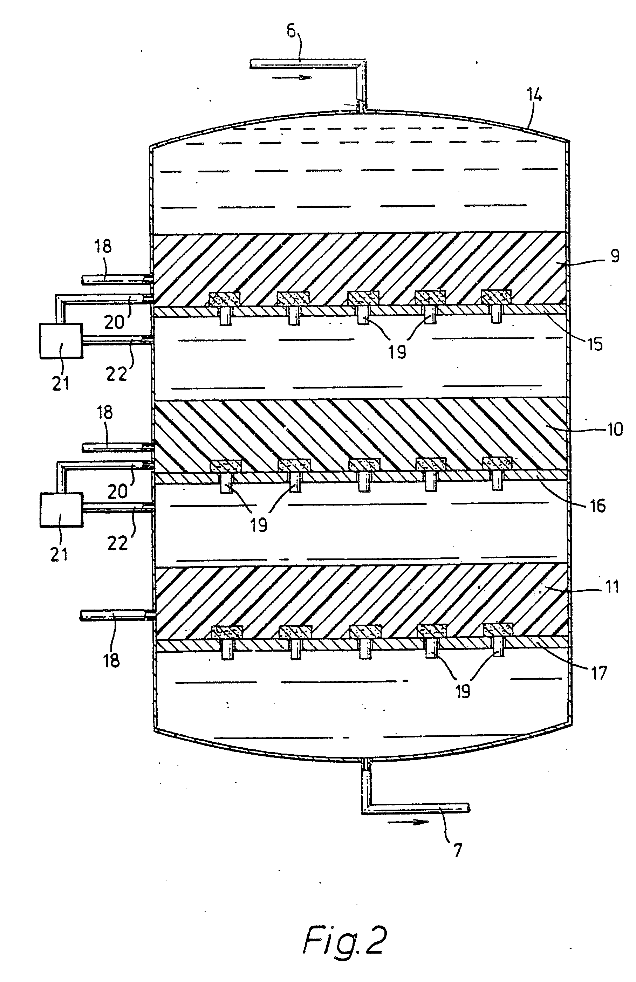

The invention is illustrated in the accompanying drawings in which Figure 1 illustrates diagrammatically the apparatus and process in which the resin beds are held in separate vessels and Figure 2 illustrates an apparatus and process in which the resin beds are held in a tower.

The apparatus shown in Figure 1 comprises columns 1, 2 and 3 connected by appropriate pipe work 4 and 5. Water to be purified is introduced into the top of column 1 by duct 6 and the treated water is taken from the base of column 3 by duct 27.

This particular apparatus can conveniently be constructed on an industrial scale, for instance with each column from 1 to 4 metres in diameter, with the duct 6 leading from the supply of condensate, but the particular apparatus illustrated is of a laboratory test unit equipped also with inlets 7 and 8. 7 may be utilised for the introduction of ammonia so as to raise the pH of the water being treated to the level common in power station condensates and the inlet 8 may be used for the introduction of small amounts of sodium chloride so as to stimulate salt water leakage into the condensate.

Column 1 contains a bed 9 of cation resin while column 2 contains a bed 10 of anion resin and column 3 contains a bed 11 of cation resin.

Each column is provided with suitable ducting 12 either for removing the resin to be regenerated to separate regeneration apparatus or for passing regenerant and rinse water through the column and with inlets 13 for introducing backwashing water and for air for air mixing.

In an example the cation exchange resin used in beds 9 and 11 is a styrene DVB sulphonic acid resin that has been scoured with steam whilst the anion exchange resin is a styrene DVB quaternary ammonium resin that has been scoured with steam. The beds 9 and 11 are each about 33 cm deep and the bed 10 about 66 cm deep.

A service flow of water having a substantially neutral pH and having a dissolved solids content typical of power station condensate, e.g. varying between 1 and 10 mg/l, is introduced through duct 6 so as to pass through the vessels at a rate of 120 metres per hour, this being equivalent to 360 bed volumes per hour through columns 1 and 3 and 180 bed volumes per hour through column 2. With the resins in the hydrogen and hydroxide form this resulted in the production of water at outlet 27 having the theoretical minimum conductivity of water and having a dissolved sodium content of less than 0.1 $\mu$g/l and a total dissolved solids content of less than 1 $\mu$g/l. When the resins approached exhaustion they were regenerated, beds 9 and 11 being regenerated with sulphuric acid or hydrochloric acid and bed 10 being regenerated first with 2% aqueous sodium bicarbonate and then with about 5% aqueous sodium hydroxide. Before regeneration each bed was backwashed and after regeneration each bed was rinsed with water and air mixed.

The process was repeated whilst introducing ammonia through inlet 7 at a rate sufficient to give ammonia saturation of all three columns and a pH of about 9.6. It was found that the dissolved sodium and total solids content were about the same as in the initial test.

This second process was then repeated whilst dosing sodium chloride at a rate equivalent to a sodium leakage of 1.3 mg/l through inlet 8 into the water having a pH of 9.6 and this rate of dosing and operation was continued for a period of above 5 hours. Throughout this test the dissolved sodium content leaving column 2 was always below 10 $\mu$g/l and at the outlet 27 was always below 0.1 $\mu$g/1. Total solids were also always below 1 $\mu$g/l. Acid conductivity in the water leaving outlet 27 was approximately 0.09 micromhos per centimetre at a temperature of 28°C.

In these processes, instead of introducing ammonia at inlet 7 similar results may be achieved using amines such as morpholine or cyclohexylamine. Instead of regenerating in the vessels the resins may be removed from the vessels and regenerated outside.

In some instances column 1 can be omitted entirely the inlet 6 then feeding direct into column 2.

The apparatus shown in Figures 2 comprises a tower 14, constructed as a pressure vessel, provided with an inlet 6 and an outlet 7 and substantially horizontal support plates 15, 16 and 17. Beds 9 and 11 of cation exchange resin may be supported on the plates 15 and 17 respectively and a bed 10 of anion exchange resin may be supported on plate 16. Connections 18 for introducing and removing the resin to each bed separately are provided. Each of the plates 15, 16 and 17 may be provided with strainers 19 as illustrated, these strainers being constructed to permit the downward passage of water but to prevent the passage of resin. Alternatively at least around plate 16 and preferably also around plate 15, an outlet 20 for removing water from the bottom of the bed may be provided and may lead to a filter 21 and filtered water may then be reintroduced above the next lower bed at 22.

The resins may be regenerated within the column by appropriate design of connections, including both inlets and outlets, 18 provided always that each bed is regenerated separately, or the resins may be withdrawn from this unit through connection 18 for regeneration in external columns in conventional manner. The collecting systems and division plates used can be of various designs but are preferably designed particularly to prevent contamination of the anion resin by acids and it is important that they are designed that anion resin particles and fines do not migrate from the anion resin section into any trail cation section. Accordingly the collecting system should avoid penetration in the division plates and may take the partially treated water from the anion layer out of the vessel and through a fine filter before returning it to the trail cation layer.

In a typical process the vessel 14 is 2 metres in diameter and the resin types and bed depths are the same as described above with reference to Figure 1. The flow rate may be less than as described above but preferably is substantially the same. Similar results may be achieved to those described for Figure 1.

Plate 15 and bed 9 may be omitted if slightly higher dissolves solids contents at the outlet 7 can be tolerated.

## Claims

1. A process of purifying water of low solids contents by ion exchange comprising treating the water in a bed of anion exchange resin followed by a final bed of cation exchange resin in which each bed is less than 1 metre deep and the cation and anion exchange resins are regenerated, when necessary, separate from each other characterised in that the flow rate through the final bed is above 100 metres per hour and the flow rate and the regeneraton are such that the dissolved solids content of the purified water is below 5 $\mu$g/l.

2. A process according to claim 1 characterised in that the flow rate through all the beds is above 100 metres per hour.

3. A process according to claim 1 or claim 2 characterised in that the flow rate and the regeneration are such that the dissolved solids content of the treated water is less than 1 $\mu$g/l.

4. A process according to any preceding claim characterised in that the water is first treated in a bed of cation exchange resin less than 1 metre deep.

5. A process according to any preceding claim characterised in that the beds of resin are arranged one above the other in a vertical tower on substantially horizontal supports and the water to be treated is passed down the tower while migration of resin from one bed to the next is prevented.

6. A process according to any preceding claim characterised in that the water is first treated in a cation exchange resin bed 25 to 40 cm deep, then in an anion exchange resin bed 50 to 75 cm deep and finally in a cation exchange resin bed 25 to 40 cm deep.

7. A process according to any preceding claim characterised in that the flow rate through each bed is from 120 to 240 metres per hour.

8. A process according to any preceding claim characterised in that the water contains sufficient of a volatile nitrogenous base that its pH is above 8.

9. A process according to any preceding claim characterised in that the anion resin and the cation resin are regenerated separately and, after regeneration, are individually air mixed in the bed through which the water to be purified will flow.

10. A process according to claim 9 characterised in that the anion resin is regenerated first by treatment with sodium carbonate or bicarbonate and then by treatment with sodium hydroxide.

11. A process according to any preceding claim characterised in that the resins used are substantially free of organic chlorine compound.

## Patentansprüche

1. Verfahren zur Reinigung von Wasser mit geringem Feststoffgehalt durch Ionenaustauscher, welches umfaßt: Behandlung des Wassers in einem Bett mit Anionaustauscher-Harz und danach in einem abschließenden Bett mit Kationenaustauscher-Harz, wobei jedes Bett jeweils weniger als 1 m Tiefe aufweist und die Kationen und Anionenaustauscherharze gegebenenfalls getrennt voneinander regeneriert werden, dadurch gekennzeichnet, daß die Fließgeschwindigkeit durch das abschließende Bett mehr als 100 m/h beträgt und daß die Fließgeschwindigkeit und die Regenerierung derart ist, daß der Gehalt an gelösten Festoffen des gereinigten Wassers weniger als 5 $\mu$g/l beträgt.

2. Verfahren nach anspruch 1, dadurch gekennzeichnet, daß die Fließgeschwindigkeit durch alle Betten mehr als 100m/h beträgt.

3. Verfahren nach Anspruch 1, oder 2, dadurch gekennzeichnet, daß Fließgeschwindigkeit und Regenerierung derart ist, daß der Gehalt an gelösten Feststoffen des behandelten Wassers weniger als 1 $\mu$g/l beträgt.

4. Verfahren nach einem der vorhergehenden Ansprüche, dadurch gekennzeichnet, daß das Wasser zuerst in einem Bett mit Kationenaustauscherharz von weniger als 1 m Tiefe behandelt wirt.

5. Verfahren nach einem der vorhergehenden Ansprüche, dadurch gekennzeichnet, daß die Harz-Betten übereinander in einem vertikalen Turm auf im wesentlichen horizontalen Trägern angeordnet sind und das zu behandelnde Wasser nach unten durch den Turm geleitet wird, wobei die Wanderung des Harzes von einem Bett zum anderen verhindert wird.

6. Verfahren nach einem der vorhergehenden Ansprüche, dadurch gekennzeichnet, daß das Wasser zuerst in einem Bett mit Kationenaustauscher-Harz von 25—40 cm Tiefe, dann in einem Bett mit Anionenaustauscher-Harz von 50—75 cm Tiefe und schließlich in einem Bett mit Kationenaustauscher-Harz von 25—40 cm Tiefe behandelt wird.

7. Verfahren nach einem der vorhergehenden Ansprüche, dadurch gekennzeichnet, daß die Fließgeschwindigkeit in jedem der Betten zwischen 120 und 240 m/h beträgt.

8. Verfahren nach einem der vorhergehenden Ansprüche, dadurch gekennzeichnet, daß das Wasser eine ausreichende Menge einer flüchtigen stickstoffhaltigen Base enthält, so daß dessen pH-Wert über 8 liegt.

9. Verfahren nach einem der vorhergehenden Ansprüche dadurch gekennzeichnet, daß das Anionenaustauscher-Harz und das Kationenaustauscher-Harz getrennt voneinander regeneriert werden und nach der Regenerierung jeweils einzeln in dem Bett mit Luft vermischt werden, durch welche das zu reinigende Wasser fließen wird.

10. Verfahren nach Anspruch 9, dadurch gekennzeichnet, daß das Anionenaustauscher-Harz zuerst durch Behandlung mit Natriumcarbonat oder -bicarbonat und dann durch Behandlung mit Natriumhydroxid regeneriert wird.

11. Verfahren nach einem der vorhergehenden Ansprüche, dadurch gekennzeichnet, daß die verwendeten Harze im wesentlichen keine organischen Chlorverbingungen enthalten.

## Revendications

1. Procédé pour purifier l'eau à faible teneur en solides par échange d'ions comprenant le traitement de l'eau dans un lit de résine échangeuse d'anions suivi d'un lit final de résine échangeuse de cations, dans lequel chaque lit a moins de 1 m d'épaisseur et les résines échangeuses de cations et d'anions sont regénérées si nécessaire séparément l'une de l'autre, caractérisé en ce que le débit à travers le lit final est de plus de 100 m/h et le débit et la régénération sont tels que la teneur en solides dissous de l'eau purifiée soit moins de 5 γ/l.

2. Procédé selon la revendication 1, caractérisé en ce que le débit à travers tous les lits est de plus de 100 m/h.

3. Procédé selon la revendication 1 ou 2, caractérisé en ce que le débit et la régénération sont tels que la teneur en solides dissous de l'eau traitée soit de moins de 1 γ/l.

4. Procédé selon l'une quelconque des revendications précédentes, caractérisé en ce que l'eau est d'abord traitée dans un lit de résine échangeuse de cations de moins de 1 m de profondeur.

5. Procédé selon l'une quelconque des revendications précédentes, caractérisé en ce que les lits de résines sont disposés l'un au-dessus de l'autre dans une tour verticale sur des supports sensiblement horizontaux et l'on fait passer l'eau à traiter de haut en bas à travers la tour, tout en empêchant la migration de la résine d'un lit au suivant.

6. Procédé selon l'une quelconque des revendications précédentes, caractérisé en ce que l'on traite l'eau d'abord dans un lit de résine échangeuse de cations de 25 à 40 cm de profondeur, ensuite dans un lit de résine échangeuse d'anions de 50 à 75 cm d'épaisseur et enfin dans un lit de résine échangeuse de cations de 25 à 40 cm d'épaisseur.

7. Procédé selon l'une quelconque des revendications précédentes, caractérisé en ce que le débit à travers chaque lit est de 120 à 240 m/h.

8. Procédé selon l'une quelconque des revendications précédentes, caractérisé en ce que l'eau contient suffisamment d'une base azotée volatile pour que son pH soit supérieur à 8.

9. Procédé selon l'une quelconque des revendications précédentes, caractérisé en ce que la résine à anions et la résine à cations sont régénérées séparément et, après régénération, mélangé individuellement à l'air dans le lit à travers lequel doit passer l'eau à purifier

10. Procédé selon la revendication 9, caractérisé en ce que la résine à anions est régénérée d'abord par traitement par le carbonate ou le bicarbonate de sodium et ensuite par traitement par l'hydroxyde de sodium.

11. Procédé selon l'une quelconque des revendications précédentes, caractérisé en ce que les résines utilisées sont sensiblement exemptes de composé chloré organique.

*Fig.1*

0 002 342

Fig.2